# EUROPEAN PATENT SPECIFICATION

(11) **EP 3 906 151 B1**
(45) Date of publication and mention of the grant of the patent: **05.10.2022**
(21) Application number: 19828085.1
(22) Date of filing: 04.12.2019
(51) Int. Cl.: B29C 73/04, B29C 73/26, B33Y 10/00, B33Y 30/00, B33Y 50/00

(54) **SYSTEM AND METHOD FOR REPAIRING A THREE-DIMENSIONAL ARTICLE**
SYSTEM UND VERFAHREN ZUR REPARATUR EINES DREIDIMENSIONALEN GEGENSTANDES
SYSTÈME ET PROCÉDÉ DE RÉPARATION D'UN ARTICLE TRIDIMENSIONNEL

(30) Priority: 31.12.2018 US 201862786776 P
(43) Date of publication of application: 10.11.2021
(73) Proprietor: 3D Systems, Inc., Rock Hill, SC 29730 (US)
(72) Inventor: BLANK, Jeffrey, Kenneth, Tigard, OR 97224 (US)
(74) Representative: dompatent von Kreisler Selting Werner - Partnerschaft von Patent- und Rechtsanwälten mbB
(86) International application number: PCT/US2019/064448
(87) International publication number: WO 2020/142156

(56) References cited:
- WO-A1-2018/113875
- US-A1- 2015 090 392
- US-A1- 2017 225 400

## Description

### Cross-Reference to Related Applications

This non-provisional patent application claims priority to U.S. Provisional Application Serial Number 62/786,776, Entitled "SYSTEM AND METHOD FOR REPAIRING A THREE-DIMENSIONAL ARTICLE" by Jefferey Kenneth Blank, filed on December 31, 2018.

### Field of the Invention

The present disclosure relates to three-dimensional (3D) printing. More particularly, the present disclosure relates to restoration of a broken three-dimensional (3D) article.

### Background

Three-dimensional (3D) printing is an effective way to manufacture customized or low volumes of complex articles. Generally, the cost per unit article of 3D printing is much higher than that of higher volume processes such as injection molding. Some of the complex articles that are fabricated suffer from breakage either during fabrication or handling.

Document US 2017/225400 A1 discloses a manufacturing method of repairing a damaged 3D article wherein a repair portion body is produced by 3D printing.

### Brief Description of the Figures

FIG. 1 is a schematic block diagram of an embodiment of a 3D print engine electrically or wirelessly coupled to a controller.
FIG. 2 is a schematic diagram depicting an embodiment of a repair kit for restoring a broken 3D article.
FIG. 3 is a flowchart of an embodiment of a manufacturing method for repairing a damaged 3D article.
FIG. 4A is a side view diagram depicting a damaged 3D article with a fracture zone at which a portion of the 3D article has broken off.
FIG. 4B is a diagram depicting a fracture zone. An attachment feature or recess has been formed into the material at the fracture zone.
FIG. 4C is a cross-sectional diagram depicting a damaged 3D article with an attachment feature formed into material underlying the fracture zone.
FIG. 4D is a side view diagram depicting an intact 3D article.
FIG. 4E is a side view diagram depicting a repair portion.
FIG. 4F is a side view diagram depicting a restored or repaired 3D article.
FIG. 5 is a flowchart of a method performed by a controller as part of a process for restoring a damaged 3D article.
FIG. 6 is a schematic diagram depicting an embodiment of a forming tool used to form an attachment feature into material at a fracture zone of a damaged 3D article.
FIG. 7A is a diagram depicting a first embodiment of a tip of a forming tool.
FIG. 7B is a diagram depicting a second embodiment of a tip of a forming tool.
FIG. 7C is a diagram depicting a third embodiment of a tip of a forming tool.

### Summary

In a first aspect of the disclosure, a manufacturing method is for repairing a damaged three-dimensional (3D) article having a fracture zone which is a site of a broken-off portion of the 3D article. The method includes using a forming tool to form an attachment feature into material at the fracture zone, imaging the 3D article including the fracture zone to provide image data, defining a repair portion 3D body based upon a comparison between the image data and data defining an intact 3D body, printing the repair portion 3D body including a complementary attachment feature, and attaching the repair portion to the damaged 3D article through the interengagement of the complementary attachment feature and the attachment feature.

In one implementation the damaged 3D article includes a thermoplastically deformable material at the fracture zone. Forming the attachment feature includes pressing a heated tip of the forming tool into the deformable material at the fracture zone to form one or more recesses extending into the material of the fracture zone. The thermoplastically deformable material can include a wax material.

In another implementation the attachment feature and the complementary attachment feature have a complementary keying geometry. The complementary keying geometry assures that interengagement between the attachment feature and the complementary attachment feature constrains a location and orientation of the repair portion 3D body with respect to the damaged 3D article.

Yet another implementation includes storing data defining a plurality of different complementary attachment features. Defining the repair portion 3D body includes selecting one of the plurality of different complementary attachment features based upon the image data from the fracture zone.

In a further implementation defining the repair portion 3D body includes defining a 3D body of the damaged 3D article based upon the image data and Boolean subtracting the 3D body of the damaged 3D article from the intact 3D body to define an initial repair portion 3D body. Defining the repair portion 3D body can also include forming a Boolean union between the initial repair portion 3D body and the complementary attachment portion to define the repair portion 3D body.

In a yet further implementation the engagement feature is a recess formed into the material of the fracture zone. The complementary engagement feature is an upstanding feature that extends outwardly from a complementary surface of the repair 3D body. The complementary surface generally matches the fracture zone. Interengagement of the engagement feature and the complementary engagement surface occurs when the upstanding feature is received into the recess. An interference fit between the upstanding member and the recess provides resistance to removing the repair portion 3D body from the damaged 3D article.

In a second aspect of the disclosure, a kit is for repairing a damaged 3D article having a fracture zone at which a portion of an intact 3D article was broken off. The kit at least includes a forming tool, an imaging device, and a non-transient media. The forming tool is for forming an attachment feature into material at the fracture zone. The imaging device is for capturing an image of the damaged 3D article including the fracture zone. The non-transient media stores software instructions. When executed by a processor the software instructions perform the following steps: (1) perform a comparison between the image of the damaged 3D article and an intact 3D body defining the intact 3D article and (2) define a repair portion 3D body based on the comparison and including a complementary attachment feature for engaging the attachment feature when the repair portion is assembled to the damaged 3D article.

In one implementation the forming tool includes an integral heating unit attached to a heated tip. The heated tip defines a geometry of the attachment feature when it is pressed in to the fracture zone.

In another implementation the kit includes a separate heating source for heating a tip of the forming tool. The heated tip defines a geometry of the attachment feature when it is pressed in to the fracture zone.

In yet another implementation the forming tool includes a handle and a plurality of interchangeable tips. One of the plurality of interchangeable tips can be selected and attached to the handle based upon a desired geometry of an attachment feature.

In a further implementation the forming tool includes a plurality of different forming tools and/or tips for forming different attachment feature geometries into material at the fracture zone. Defining the repair portion can include selecting a complementary attachment feature based on which of the different forming tools and/or tips is used for forming the attachment feature.

In a yet further implementation the attachment feature and complementary attachment feature have a complementary keying geometry. The complementary keying geometry assures that interengagement between the attachment feature and the complementary attachment feature constrain a location and orientation of the repair portion 3D body when it is attached to the damaged 3D article.

In another implementation defining a 3D body of the damaged 3D article based upon the image of the damaged 3D article and Boolean subtracting the 3D solid body of the damaged 3D article from the intact 3D body to define an initial repair portion 3D body. Defining the repair portion 3D body can also include forming a Boolean union between the initial repair portion 3D body and the complementary attachment portion to define the repair portion 3D body.

In a third aspect of the disclosure, a system is for repairing a damaged 3D article having a fracture zone at which a portion of an intact 3D article was broken off. The system includes a forming tool, an imaging device, a 3D print engine, and a controller. The forming tool is for forming an attachment feature into material at the fracture zone. The imaging device is for capturing an image of the damaged 3D article including the fracture zone with the attachment feature. The controller is configured to define a 3D solid body of the damaged 3D article based upon the image data and define a 3D body of a repair portion based at least partly on a difference between a 3D body of an intact 3D article and the 3D body of the damaged 3D article. The repair portion includes a complementary attachment portion. Defining the 3D body of the repair portion can also include determining the complementary attachment portion geometry based upon the image of the fracture zone with the attachment feature. The controller can be further configured to operate the 3D print engine to print the repair portion.

### Detailed Description of the Preferred Embodiments

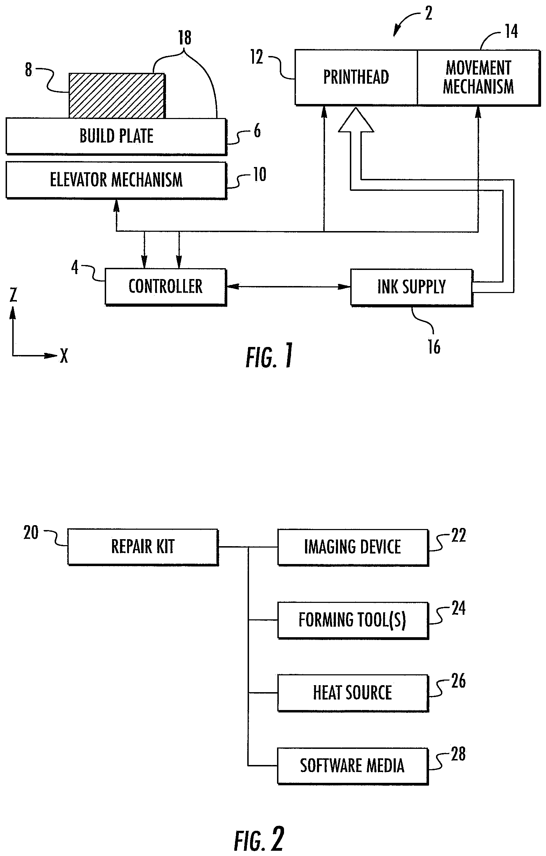

FIG. 1 is a schematic block diagram of an embodiment of a 3D print engine 2 electrically or wirelessly coupled to a controller 4. In describing print engine 2, mutually orthogonal axes X, Y, and Z can be used. Axes X and Y are referred to as lateral axes and are generally horizontal. Axis Z is referred to as a vertical axis and is generally aligned with a gravitational reference. "Generally" in regards to alignment refers to an alignment that may not be exact but is by design and within normal manufacturing tolerances.

Print engine 2 includes a build plate 6 for supporting a three-dimensional (3D) article 8. Build plate 6 is supported by an elevator mechanism 10 for at least adjusting a height of the build plate 6. Print engine 2 includes a printhead 12 for depositing drops of an ink for forming 3D article 8 in a layer-by-layer manner. A movement mechanism 14 is configured to impart relative lateral motion along one or two axes between the printhead 12 and the build plate 6. An ink supply 16 is configured to supply ink to the printhead 12.

Controller 4 is controllably coupled to the elevator mechanism 10, the printhead 12, the movement mechanism 14, the ink supply 16, other parts of the print engine 2 and other devices such as a scanner or imaging device. The controller 4 includes a processor coupled to an information storage device. The information storage device includes a non-transient media storing software instructions. When executed by the processor, the software instructions control portions of the print engine and other devices. The controller can be a single integrated computer or it can be distributed among multiple devices. The controller can include a local controller associated with the print engine, a host computer, and/or other devices such as remote server computers.

The controller 4 is configured to perform various tasks such as printing a 3D article 8. The method for printing a 3D article is as follows: (1) The elevator mechanism 10 positions an upper surface 18 of the build plate or an upper surface of the 3D article 8 at a "build plane." (2) The movement mechanism 14 imparts lateral motion between the printhead 12 and the upper surface as the printhead 12 selectively prints a layer of material onto the 3D article. (3) Steps (1) and (2) are repeated until the 3D article 8 is fabricated.

In an illustrative embodiment, the ink contained within the ink supply 16 is a "phase change" ink that is a solid at room temperature but liquifies at an elevated temperature. The ink is heated to liquid form as it is transported to and printed by the printhead 12. The printhead 12 prints by ejecting a dot matrix pattern of liquid drops upon the upper surface 18. Upon impact with upper surface 18, the liquid drops quickly harden. In one embodiment, the ink can include a wax component that provides the phase change property. Such wax comprising inks are useful for making patterns for investment casting. Such wax comprising inks include but are not limited to the materials disclosed in US

Patent Numbers 6,841,589; 8,575,258; and 9,394,441. In some embodiments, the ink can also include a UV curable component to provide increased strength of the 3D article 8 after a radiation curing process. In some embodiments, the ink can include a plurality of different inks having different colors and/or different compositions.

More generally, the ink is a thermoplastically deformable ink. Thus, to an extent, the ink can be shaped and formed with heat and pressure after the 3D article is printed.

The controller 4 stores "original data" defining an intact 3D body which is an intact or unbroken version of a 3D article 8. During a print process, or during subsequent handling, the 3D article 8 may be damaged. This is particularly a risk using wax-based inks and forming intricate and delicate 3D articles 8. A damaged 3D article may be missing a broken off portion. A fracture zone would be a site of the break.

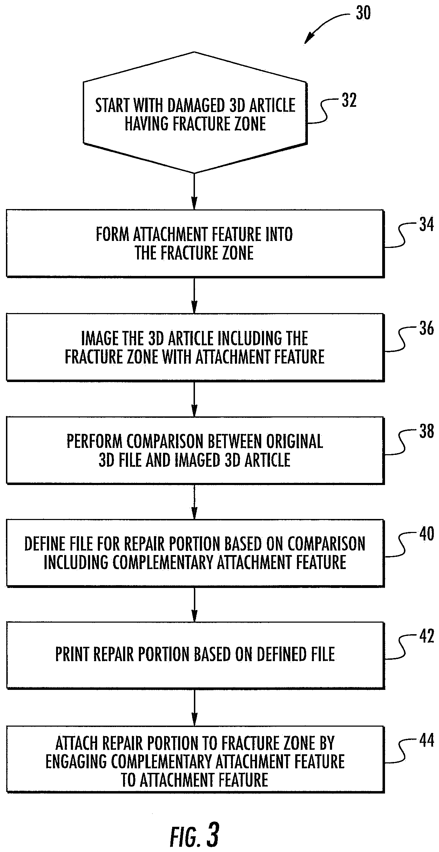

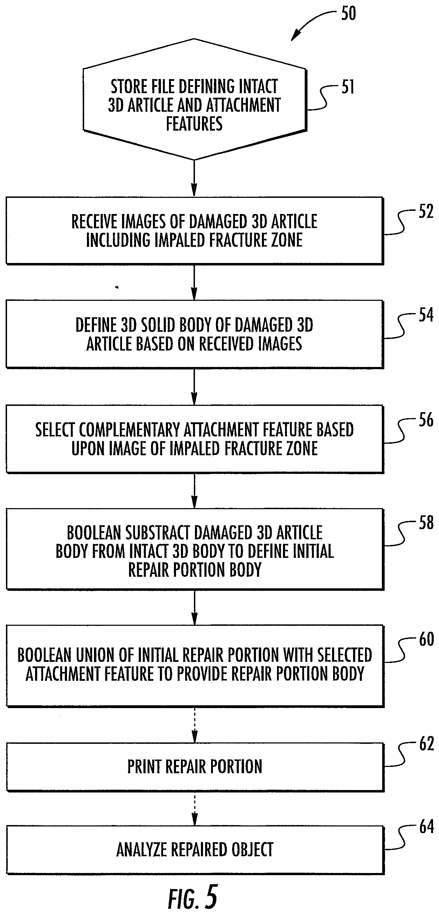

FIG. 2 is a diagram depicting a repair kit 20 for restoring a broken 3D article. In an illustrative embodiment, the repair kit 20 includes an imaging device 22, one or more forming tools 24, an optional heat source 26, and software media 28. The imaging device 22 can be a hand-held scanner for capturing images and image data from a damaged 3D article and providing the data to controller 4. The forming tool 24 is configured to form material at the fracture zone to define an attachment feature. There may be more than one forming tool 24 for different fracture zone geometries. In some embodiments, a forming tool 24 can have interchangeable tips having varying tip geometries. The heat source 26 is for heating a tip of the forming tool 24 before use. The heat source 26 can be an electrically heated plate. Alternatively, the forming tool 24 may incorporate an integral heat source 26. The software media 28 stores software instructions to be executed by a processor in controller 4 (or a counterpart of controller 4) to facilitate the repair. Embodiments of the software execution will be described with respect to FIGS. 3 and 5. The software media 28 can a hand-held media such as a flash drive or a compact disc. Alternatively, the software media may be remotely stored in a server but accessible by controller 4.

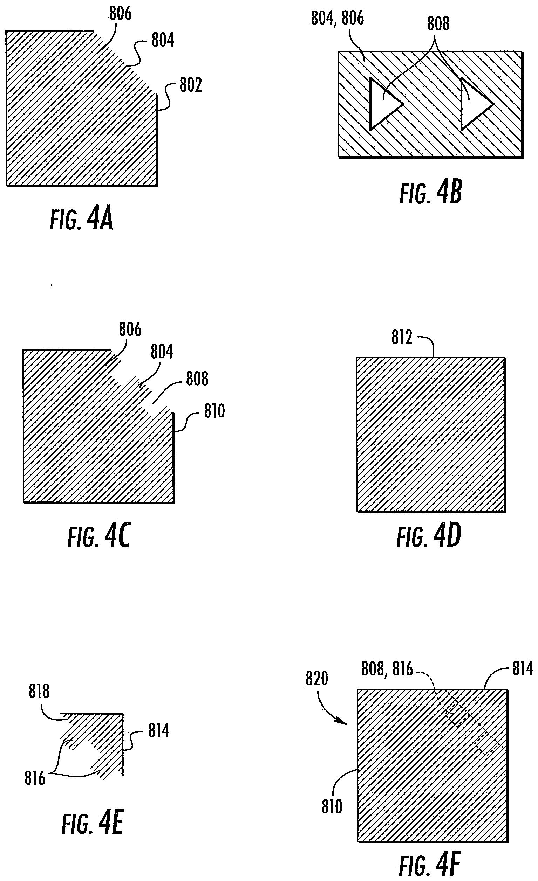

FIG. 3 is a flowchart of an embodiment of a manufacturing method 30 for repairing a damaged 3D article 8. FIGS. 4A-F are illustrations that correspond to steps of FIG. 3 and illustrate variations or portions of 3D articles 8 involved with the repair process. Therefore, these will be labeled 8MN, in which the first digit 8 corresponds to a printed 3D article 8 and the last two digits MN correspond to which portion is involved.

According to 32, a 3D article 8 has been damaged. Thus, method 30 starts with a damaged 3D article 802 having a fracture zone 804. The fracture zone 804 is a broken surface at which a portion of the damaged 3D article 802 has broken off. The fracture or break may have happened during manufacture, handling, or use of the now-broken 3D article 802. Underlying the fracture zone 804 is material 806 in the vicinity of the fracture zone 804.

According to 34, the forming tool 24 is utilized to form an attachment feature 808 into the material 806 of the fracture zone 804. In the illustrated embodiment of FIGS. 4B and 4C, the attachment feature 808 includes two recesses 808. The recesses 808 have an asymmetric geometry which provides an important function to be described infra. In the illustrative embodiment, the forming tool 24 has a heated tip that is pressed into the material 806 to form the recesses 808. Thus, the recesses 808 are formed with heat and pressure applied by the heated tip. FIG. 4C illustrates the 3D article 810 with the attachment feature (recesses) 808 formed into the material 806 of the fracture zone 804.

According to 36, the imaging device 22 is utilized to image or scan the damaged 3D article. This includes capturing an image of the fracture zone 804 and the attachment feature(s) or recess(es) 808.

FIG. 4D depicts an intact article or body 812 defined by an initial or original data file for article 812. The imaged or scanned data of the damaged 3D article 810 defines a damaged 3D body 810. According to 38, comparison is made between the intact 3D body 812 and the damaged 3D body 810.

According to 40, a file or 3D body for a repair portion 814 is defined based at least upon the comparison of step 38. Also defined is a complementary attachment feature 816. In the illustrative embodiment, the repair portion includes a complementary surface 818 intended to generally match the fracture zone 804. Complementary attachment features 816 are referred to as complementary because they are upstanding features 816 having a geometry to be received into the recesses 808.

According to 42, the print engine 2 is operated to print the repair portion 814. According to 44, the repair portion 814 is attached to the damaged 3D article 810 to provide a repaired or restored 3D article 820. In the illustrative embodiment of FIG. 4B, the attachment features 808 have a "keying" function. This is provided by an asymmetry whereby an orientation and alignment of the repair portion 814 with respect to the damaged portion 810 is constrained by the interengagement of the attachment features 808 and the complementary attachment features 816. As a result, a difficulty of properly aligning the repair portion 814 to the damaged article 810 is reduced. The interengagement of the attachment features 808 and the complementary attachment features 816 also secures the repair portion 814 to the damaged article 810. Preferably the fit between an upstanding feature 816 and a recess 808 is an interference fit which will frictionally resist removal of the repair portion 814 from the damaged article 810 once attached. In some embodiments, adhesives or waxes can be used to bond the upstanding feature 816 to the recess 808.

FIG. 5 is a flowchart of a method 50 performed by the controller 4. Steps 52-60 correspond to steps 36-40 of method 30, but steps 52-60 are a more particular embodiment of these steps. Step 62 corresponds to step 42.

According to 51, controller 4 stores a file defining an intact 3D body 812. The controller 4 also stores a plurality of files defining a selection of different complementary attachment features 816 corresponding individually to the heated tip geometries a plurality of forming tools 24 (or interchangeable tips).

According to 52, the controller 4 receives images captured from the damaged 3D article 810. The images include images of the fracture zone 804 with the attachment feature 808 formed therein.

According to 54, the controller 4 defines a damaged 3D body 802 based upon the received images. According to 56, the controller selects a file defining a complementary attachment feature 816 from the stored plurality of files based upon an image of the fracture zone 804 and the formed attachment feature 808. As a note, steps 54 and 56 can be concurrent or be performed in a reverse order.

According to 58, the controller 4 performs a Boolean subtraction of the damaged 3D body 802 from the intact 3D body 812 (812 NOT 802) to define an initial repair portion 3D body. According to 60 the controller 4 performs a Boolean addition (union) of the initial repair portion 3D body and the selected complementary attachment feature body 816 to provide the repair portion 3D body 814.

According to 62, the controller 4 operates the print engine 2 to print the repair portion 814. After the repair portion 814 is printed, it can be coupled to the damaged 3D article 810 to result in the restored 3D article 820.

The restored 3D article can be scanned or imaged by the imaging device 22. Then, according to 64, the controller 4 can analyze the restored 3D article 820. This can include a comparison of the restored body 820 with the initial intact body 812. Such a comparison may include a Boolean subtraction between 812 and 820. As part of 64, the controller may provide an indication to a user as to the accuracy of the restored 3D article 820 relative to the intact 3D body 812.

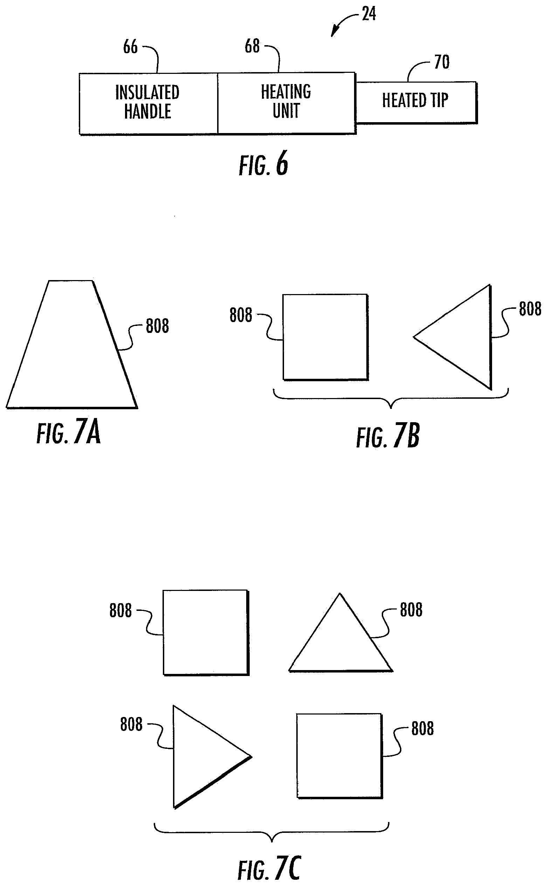

FIG. 6 is a schematic diagram depicting an embodiment of a forming tool 24 used to form the attachment feature or recess 808 into the material 806 of fracture zone 804. The forming tool can include a thermally insulated handle 66, a heating unit 68, and a heated tip 70. In use, a user grips the insulated handle 66 and presses the heated tip 70 into the material 806 of fracture zone 804 to form the recess 808. In one embodiment, the heated tip 70 is interchangeable. Along with forming tools 24, the kit 20 can include a plurality of interchangeable tips each corresponding to a different geometry of a desired attachment feature 808.

Generally speaking, a desired attachment feature 808 geometry can be a function of the geometry of the fracture zone 804. For a very small fracture zone 804, it may be desirable for the tip 70 to form a single recess 808, as illustrated in FIG. 7A. For a relatively narrow but elongate fracture zone, it may be desirable to form a pair or generally linear array of recesses 808 as illustrated in FIG. 7B. For a larger area, it may be desirable to form a two dimensional array of recesses as illustrated in FIG. 7C. For all of these embodiments, it is preferable that they provide a complementary keying geometry - that is, the interengagement geometry between the upstanding features 816 and the recesses 808 constrain the location and orientation of the repair portion 814 with respect to the damaged 3D article 810. This assures that the restored 3D article 820 will match the intact 3D body 812 as accurately as possible without a requirement of extreme user skill and dexterity.

The specific embodiments and applications thereof described above are for illustrative purposes only and do not preclude modifications and variations encompassed by the scope of the following claims.

## Claims

1. A manufacturing method of repairing a damaged 3D article (810) having a fracture zone (804) which is a site of a broken-off portion of the 3D article comprising:
using a forming tool (24) to form an attachment feature (808) into material at the fracture zone (804);
imaging the 3D article including the fracture zone to provide image data;
defining a repair portion 3D body (814) based upon a comparison between the image data and data defining an intact 3D body (812);
printing the repair portion 3D body (814) including a complementary attachment feature (816); and
attaching the repair portion to the damaged 3D article (810) through the interengagement of the complementary attachment feature (816) and the attachment feature (808).

2. The method of claim 1 wherein the damaged 3D article includes a thermoplastically deformable material at the fracture zone, forming the attachment feature includes pressing a heated tip of the forming tool into the deformable material at the fracture zone to form one or more recesses extending into the material of the fracture zone, and
wherein the thermoplastically deformable material preferably includes a wax material.

3. The method of claim 1 wherein the attachment feature and complementary attachment feature have a complementary keying geometry that constrains a location and orientation of the repair portion with respect to the damaged 3D article.

4. The method of claim 1 further comprising storing data defining a plurality of different complementary attachment features, and
wherein defining includes selecting one of the plurality of different complementary attachment features based upon the image data from the fracture zone.

5. The method of claim 1 wherein defining the repair portion 3D body further comprises:
defining a 3D body of the damaged 3D article based upon the image data; and
Boolean subtracting the 3D body of the damaged 3D article from the intact 3D body to define an initial repair portion 3D body, and
preferably the method further comprises forming a Boolean union between the initial repair portion 3D body and the complementary attachment portion to define the repair portion 3D body.

6. A kit (20) for repairing a damaged 3D article (810) having a fracture zone (804) at which a portion of an intact 3D article was broken off comprising:
a forming tool (24) for forming an attachment feature into material at the fracture zone;
an imaging device (22) for capturing an image of the damaged 3D article including the fracture zone;
a non-transient media storing software instructions which, when executed by a processor, perform the following steps:
perform a comparison between the image of the damaged 3D article and an intact 3D body defining the intact 3D article; and
define a repair portion 3D body based on the comparison and including a complementary attachment feature for engaging the attachment feature when the repair portion is assembled to the damaged 3D article.

7. The kit of claim 6 wherein the forming tool includes an integral heating unit attached to a heated tip, the heated tip defines a geometry of the attachment feature when it is pressed into the fracture zone, and
wherein the kit preferably further comprises a separate heat source for warming a tip of the forming tool, and
wherein the attachment feature and complementary attachment feature preferably have a complementary keying geometry that constrains a location and orientation of the repair portion when it is assembled to the damaged 3D article.

8. The kit of claim 6 wherein the forming tool includes a plurality of different forming tool tips and/or complete forming tools to allow a selection from a plurality of different attachment feature geometries to be formed into the material at the fracture zone, and wherein defining the repair portion 3D body preferably includes selecting a complementary attachment feature from a plurality of different complementary attachment feature geometries based upon the selected attachment feature geometry.

9. The kit of claim 6 wherein defining the repair portion 3D body includes:
defining a 3D body of the damaged 3D article based upon the image of the damaged 3D article; and
Boolean subtracting the 3D solid body of the damaged 3D article from the intact 3D body to define an initial repair portion 3D body.

10. The kit of claim 6 wherein defining a repair portion 3D body further includes forming a Boolean union between the initial repair portion 3D body and the complementary attachment portion.

11. A system for repairing a damaged 3D article (810) having a fracture zone (804) at which a portion of an intact 3D article was broken off comprising:
a forming tool (24) for forming an attachment feature (808) into material at the fracture zone;
an imaging device (22) for capturing an image of the damaged 3D article including the fracture zone with the attachment feature;
a 3D print engine (2); and
a controller (4) including a processor coupled to a non-transient media storing software instructions, execution of the software instructions by the processor cause the controller to:
define a 3D solid body of the damaged 3D article based upon the image data; and
define a 3D body of a repair portion based at least partly on a difference between a 3D body of an intact 3D article and the 3D body of the damaged 3D article, the repair portion including a complementary attachment portion.

12. The system of claim 11 wherein defining the 3D body of the repair portion also includes determining the complementary attachment portion geometry based upon the image of the fracture zone with the attachment feature.

13. The system of claim 11 wherein defining the repair portion 3D body includes:
defining a 3D body of the damaged 3D article based upon the image of the damaged 3D article; and
Boolean subtracting the 3D solid body of the damaged 3D article from the intact 3D body to define an initial repair portion 3D body.

14. The system of claim 11 wherein defining a repair portion 3D body further includes forming a Boolean union between the initial repair portion 3D body and the complementary attachment portion.

15. The system of claim 11 wherein the controller operates the 3D print engine to print the repair portion.

## Patentansprüche

1. Herstellungsverfahren zum Reparieren eines beschädigten 3D-Artikels (810), der eine Bruchzone (804) aufweist, bei der es sich um eine Stelle eines abgebrochenen Teils des 3D-Artikels handelt, umfassend:
Verwenden eines Formwerkzeugs (24) zum Formen eines Befestigungselements (808) in Material in der Bruchzone (804) hinein;
Abbilden des 3D-Artikels einschließlich der Bruchzone, um Bilddaten zu erhalten;
Definieren eines Reparaturteil-3D-Körpers (814) anhand eines Vergleichs zwischen den Bilddaten und Daten, die einen intakten 3D-Körper (812) definieren;
Drucken des Reparaturteil-3D-Körpers (814) einschließlich eines komplementären Befestigungselements (816); und
Befestigen des Reparaturteils an dem beschädigten 3D-Artikel (810) durch das Aneinanderangreifen des komplementären Befestigungselements (816) und des Befestigungselements (808).

2. Verfahren gemäß Anspruch 1, wobei der beschädigte 3D-Artikel an der Bruchzone ein thermoplastisch verformbares Material umfasst, das Formen des Befestigungselements das Drücken einer beheizten Spitze des Formwerkzeugs in das verformbares Material an der Bruchzone umfasst, wobei ein oder mehrere Vertiefungen entstehen, die sich in das Material der Bruchzone hinein erstrecken, und
wobei das thermoplastisch verformbare Material vorzugsweise ein Wachsmaterial umfasst.

3. Verfahren gemäß Anspruch 1, wobei das Befestigungselement und das komplementäre Befestigungselement eine komplementäre Verzahnungsgeometrie aufweisen, die den Ort und die Ausrichtung des Reparaturteils in Bezug auf den beschädigten 3D-Artikel einschränkt.

4. Verfahren gemäß Anspruch 1, weiterhin umfassend das Speichern von Daten, die eine Vielzahl verschiedener komplementärer Befestigungselemente definieren, und
wobei das Definieren das Auswählen von einem aus der Vielzahl der verschiedenen komplementären Befestigungselementen auf der Basis der Bilddaten aus der Bruchzone umfasst.

5. Verfahren gemäß Anspruch 1, wobei das Definieren des Reparaturteil-3D-Körpers weiterhin umfasst:
Definieren eines 3D-Körpers des beschädigten 3D-Artikels anhand der Bilddaten; und
Boolesche Subtraktion des 3D-Körpers des beschädigten 3D-Artikels von dem intakten 3D-Körper, um einen Anfangsreparaturteil-3D-Körper zu definieren; und
wobei vorzugsweise das Verfahren weiterhin umfasst: Bilden einer Booleschen Vereinigung zwischen dem Anfangsreparaturteil-3D-Körper und dem komplementären Befestigungsteil, um den Reparaturteil-3D-Körper zu definieren.

6. Kit (20) zum Reparieren eines beschädigten 3D-Artikels (810), der eine Bruchzone (804) aufweist, bei der ein Teil eines inbtakten 3D-Artikels abgebrochen ist, umfassend:
ein Formwerkzeug (24) zum Formen eines Befestigungselements in Material in der Bruchzone hinein;
eine Abbildungsvorrichtung (22) zum Aufnehmen eines Bildes des beschädigten 3D-Artikels einschließlich der Bruchzone;
einen Permanentspeicher, der Softwareanweisungen speichert, die, wenn sie von einem Prozessor ausgeführt werden, die folgenden Schritte durchführen:
Durchführen eines Vergleichs zwischen dem Bild des beschädigten 3D-Artikels und einem intakten 3D-Körper, der den intakten 3D-Artikel definiert; und
Definieren eines Reparaturteil-3D-Körpers anhand des Vergleichs und Einarbeiten eines komplementären Befestigungselements zum Angreifen an dem Befestigungselement, wenn der Reparaturteil an den beschädigten 3D-Artikel montiert wird.

7. Kit gemäß Anspruch 6, wobei das Formwerkzeug eine integrale Heizeinheit umfasst, die an einer beheizten Spitze befestigt ist, die beheizte Spitze eine Geometrie des Befestigungselements definiert, wenn sie in die Bruchzone gedrückt wird, und
wobei der Kit vorzugsweise weiterhin eine separate Wärmequelle umfasst, um die Spitze des Formwerkzeugs zu erwärmen, und
wobei das Befestigungselement und das komplementäre Befestigungselement vorzugsweise eine komplementäre Verzahnungsgeometrie aufweisen, die den Ort und die Ausrichtung des Reparaturteils einschränkt, wenn es an den beschädigten 3D-Artikel montiert wird.

8. Kit gemäß Anspruch 6, wobei das Formwerkzeug eine Vielzahl verschiedener Formwerkzeugspitzen und/oder vollständige Formwerkzeuge umfasst, um zu ermöglichen, dass eine Auswahl aus einer Vielzahl verschiedener Befestigungselementgeometrien in der Bruchzone in das Material geformt wird, und
wobei das Definieren des Reparaturteil-3D-Körpers vorzugsweise das Auswählen eines komplementären Befestigungselements aus einer Vielzahl verschiedener komplementärer Befestigungselementgeometrien anhand der ausgewählten Befestigungselementgeometrie umfasst.

9. Kit gemäß Anspruch 6, wobei das Definieren des Reparaturteil-3D-Körpers umfasst:
Definieren eines 3D-Körpers des beschädigten 3D-Artikels anhand der Bildes des beschädigten 3D-Artikels; und
Boole-Subtraktion des massiven 3D-Körpers des beschädigten 3D-Artikels von dem intakten 3D-Körper, um einen Anfangsreparaturteil-3D-Körper zu definieren.

10. Kit gemäß Anspruch 6, wobei das Definieren des Reparaturteil-3D-Körpers weiterhin das Bilden einer Booleschen Vereinigung zwischen dem Anfangsreparaturteil-3D-Körper und dem komplementären Befestigungsteil umfasst.

11. System zum Reparieren eines beschädigten 3D-Artikels (810), der eine Bruchzone (804) aufweist, bei der ein Teil eines inbtakten 3D-Artikels abgebrochen ist, umfassend:
ein Formwerkzeug (24) zum Formen eines Befestigungselements (808) in Material in der Bruchzone hinein;
eine Abbildungsvorrichtung (22) zum Aufnehmen eines Bildes des beschädigten 3D-Artikels einschließlich der Bruchzone mit dem Befestigungselement;
eine 3D-Druckmaschine (2); und
eine Steuerungseinheit (4) einschließlich eines Prozessors, der an einen Permanentspeicher gekoppelt ist und Softwareanweisungen speichert, wobei die Ausführung der Softwareanweisungen durch den Prozessor bewirkt, dass die Steuerungseinheit:
einen massiven 3D-Körper des beschädigten 3D-Artikels anhand der Bilddaten definiert; und
wenigstens teilweise anhand einer Differenz zwischen einem 3D-Körper eines intakten 3D-Artikels und dem 3D-Körper des beschädigten 3D-Artikels einen 3D-Körper eines Reparaturteils definiert, wobei der Reparaturteil einen komplementären Befestigungsteil umfasst.

12. System gemäß Anspruch 11, wobei das Definieren des 3D-Körpers des Reparaturteils auch das Bestimmen der Geometrie des komplementären Befestigungsteils anhand des Bildes der Bruchzone mit dem Befestigungselement umfasst.

13. System gemäß Anspruch 11, wobei das Definieren des Reparaturteil-3D-Körpers umfasst:
Definieren eines 3D-Körpers des beschädigten 3D-Artikels anhand des Bildes des beschädigten 3D-Artikels; und
Boole-Subtraktion des massiven 3D-Körpers des beschädigten 3D-Artikels von dem intakten 3D-Körper, um einen Anfangsreparaturteil-3D-Körper zu definieren.

14. System gemäß Anspruch 11, wobei das Definieren des Reparaturteil-3D-Körpers weiterhin das Bilden einer Booleschen Vereinigung zwischen dem Anfangsreparaturteil-3D-Körper und dem komplementären Befestigungsteil umfasst.

15. System gemäß Anspruch 11, wobei das Steuerungsgerät die 3D-Druckmaschine so betreibt, dass sie den Reparaturteil druckt.

## Revendications

1. Procédé de fabrication pour réparer un article 3D endommagé (810), ayant une zone de fracture (804), qui est une site d'une pièce brisée dudit article 3D, comprenant les étapes consistant à :
utiliser un outil de moulage (24) pour former un élément de fixation (808) dans un matériau dans la zone de fracture (804),
former une image dudit article 3D incluant la zone de fracture pour procurer des données d'image,
définir un corps 3D de pièce de réparation (814) sur la base d'une comparaison entre les données d'image et des données définissant un corps 3D intact (812),
imprimer ledit corps 3D de pièce de réparation (814) incluant un élément de fixation complémentaire (816), et
fixer la pièce de réparation à l'article 3D endommagé (810) par engagement mutuel de l'élément de fixation complémentaire (816) et l'élément de fixation (808).

2. Procédé selon la revendication 1, dans lequel ledit article 3D endommagé comprend un matériau thermoplastiquement déformable à la zone de fracture, le moulage de l'élément de fixation comprend la pression d'une pointe chauffée de l'outil de moulage dans le matériau déformable à la zone de fracture, pour former un ou plusieurs creux s'étendant dans le matériau de la zone de fracture, et
dans lequel ledit matériau thermoplastiquement déformable de préférence comprend un matériau de cire.

3. Procédé selon la revendication 1, dans lequel ledit élément de fixation et ledit élément de fixation complémentaire présentent une géométrie d'intégration complémentaire qui limite l'endroit et l'orientation de la pièce de réparation par rapport à l'article 3D endommagé.

4. Procédé selon la revendication 1, comprenant en outre l'étape consistant à stocker des données définissant une pluralité d'éléments de fixation complémentaires différents, et
dans lequel l'étape consistant à définir comprend l'étape consistant à choisir l'un parmi la pluralité d'éléments de fixation complémentaires différents, basé sur les données d'image de la zone de fracture.

5. Procédé selon la revendication 1, dans lequel la définition du corps 3D de pièce de réparation comprend en outre :
la définition d'un corps 3D de l'article 3D endommagé sur la base des données d'image, et
soustraction booléenne du corps 3D de l'article 3D endommagé du corps 3D intact pour définir un corps 3D de pièce de réparation initiale, et
de préférence le procédé comprend en outre la création d'une union booléenne entre le corps 3D de pièce de réparation initiale et la partie de fixation complémentaire pour définir le corps 3D de pièce de réparation.

6. Trousse (20) pour réparer un article 3D endommagé (810), ayant une zone de fracture (804) à laquelle une pièce d'un article 3D intact fut brisée, comprenant :
un outil de moulage (24) pour former un élément de fixation dans un matériau dans la zone de fracture,
un dispositif de formation d'image (22) pour capturer une image de l'article 3D endommagé incluant la zone de fracture,
une mémoire non volatile stockant des instructions de logiciel qui, lorsqu'elles sont exécutées par un processeur, effectuent les étapes suivantes consistant à :
effectuer une comparaison entre l'image de l'article 3D endommagé et un corps 3D intact définissant l'article 3D intact, et
définir un corps 3D de pièce de réparation sur la base de la comparaison et incluant un élément de fixation complémentaire pour engager l'élément de fixation, quand la pièce de réparation est montée sur l'article 3D endommagé.

7. Trousse selon la revendication 6, dans laquelle ledit outil de moulage comprend une unité de chauffage intégrale fixée à une pointe chauffée, la pointe chauffée définit une géométrie de l'élément de fixation lorsqu'elle est poussée dans la zone de fracture, et
dans lequel la trousse de préférence comprend en outre une source de chaleur séparée pour chauffer une pointe de l'outil de moulage, et
dans laquelle ledit élément de fixation et ledit élément de fixation complémentaire de préférence présentent une géométrie d'intégration complémentaire, qui limite l'endroit et l'orientation de la pièce de réparation quand elle est montée à l'article 3D endommagé.

8. Trousse selon la revendication 6, dans laquelle l'outil de moulage comprend une pluralité de pointes d'outil de moulage différentes et/ou des outils de moulage complets, pour permettre une sélection parmi une pluralité de géométries d'élément de fixation différentes d'être formées en le matériau dans la zone de fracture, et
dans laquelle l'étape consistant à définir le corps 3D de pièce de réparation de préférence comprend l'étape consistant à choisir un élément de fixation complémentaire parmi une pluralité de géométries d'élément de fixation complémentaires différentes, par rapport à la géométrie d'élément de fixation choisie.

9. Trousse selon la revendication 6, dans laquelle la définition du corps 3D de pièce de réparation comprend :
la définition d'un corps 3D de l'article 3D endommagé sur la base de l'image de l'article 3D endommagé, et
soustraction booléenne du corps solide 3D de l'article 3D endommagé du corps 3D intact pour définir un corps 3D de pièce de réparation initiale.

10. Trousse selon la revendication 6, dans laquelle la définition d'un corps 3D de pièce de réparation comprend la création d'une union booléenne entre le corps 3D de pièce de réparation initiale et la partie de fixation complémentaire.

11. Système pour réparer un article 3D endommagé (810), ayant une zone de fracture (804) à laquelle une pièce d'un article 3D intact fut brisée, comprenant :
un outil de moulage (24) pour former un élément de fixation (808) dans un matériau dans la zone de fracture,
un dispositif de formation d'image (22) pour capturer une image de l'article 3D endommagé incluant la zone de fracture avec l'élément de fixation,
une machine d'impression 3D (2), et
un contrôleur (4) incluant un processeur couplé à une mémoire non volatile stockant des instructions de logiciel, l'exécution des instructions de logiciel par le processeur cause que le contrôleur :
définit un corps solide 3D de l'article 3D endommagé sur la base des données d'image, et
définit un corps 3D d'une pièce de réparation sur la base au moins partiellement d'une différence entre un corps 3D d'un article 3D intact et le corps 3D de l'article 3D endommagé, la pièce de réparation incluant une pièce de fixation complémentaire.

12. Système selon la revendication 11, dans lequel la définition du corps 3D de la pièce de réparation comprend aussi la détermination de la géométrie de pièce de fixation complémentaire, basé sur l'image de la zone de fracture avec l'élément de fixation.

13. Système selon la revendication 11, dans lequel la définition du corps 3D de pièce de réparation comprend :
la définition d'un corps 3D de l'article 3D endommagé sur la base de l'image de l'article 3D endommagé, et
soustraction booléenne du corps solide 3D de l'article 3D endommagé du corps 3D intact pour définir un corps 3D de pièce de réparation initiale.

14. Système selon la revendication 11, dans lequel la définition d'un corps 3D de pièce de réparation comprend la création d'une union booléenne entre le corps 3D de pièce de réparation initiale et la partie de fixation complémentaire.

15. Système selon la revendication 11, dans lequel ledit contrôleur actionne la machine d'impression 3D pour imprimer la pièce de réparation.
